# EUROPÄISCHE PATENTSCHRIFT

(11) **EP 2 177 580 B1**
(45) Veröffentlichungstag und Bekanntmachung des Hinweises auf die Patenterteilung: **19.01.2011**
(21) Anmeldenummer: 08166848.5
(22) Anmeldetag: 16.10.2008
(51) Int. Cl.: C09D 183/08, C23C 18/12

(54) **Antihaft-Beschichtungen**
Non-stick coatings
Couches antiadhésives

(43) Veröffentlichungstag der Anmeldung: 21.04.2010
(73) Patentinhaber: Looser Holding AG, 9320 Arbon (CH)
(72) Erfinder: Brand, Jörg, 8854 Galgenen (CH)
(74) Vertreter: Schmauder & Partner AG Patent- & Markenanwälte VSP

(56) Entgegenhaltungen:
- EP-A1- 0 964 020
- EP-A2- 0 131 446
- EP-A2- 1 835 002
- DE-A1- 19 714 949
- JP-A- 2007 308 865
- US-A- 5 863 462
- "NEW DIMENSION MATERIALS FUNCTIONAL COATING & CERAMIC COMPOSITES" INTERNET CITATION April 2007 (2007-04), XP002452546 Gefunden im Internet: URL:http://www.clariant.com/C12575E4001FB2 B8/vwLookupDownloads/Publication_Clariant_ NewDimensionMaterial.pdf/$FILE/Publication _Clariant_NewDimensionMaterial.pdf> [gefunden am 2007-09-26]
- DAVID A. ELLIS, SCOTT A. MABURY, JONATHAN W. MARTIN & DEREK C. G. MUIR: "Thermolysis of fluoropolymers as a potential source of halogenated organic acids in the environment" NATURE, 19. Juli 2001 (2001-07-19), Seiten 321-324, XP002568844 ISSN: 0028-0836 DOI: 10.1038/35085548

## Beschreibung

Die folgende Erfindung umfasst neue Antihaft-Beschichtungen, ein Verfahren zu deren Herstellung sowie deren Verwendung bei der Herstellung von Koch-, Brat- und Backgeschirr.

In der Vergangenheit wurden beträchtliche Anstrengungen unternommen um metallische Gegenstände mit Antihaft-Beschichtungen zu versehen, die das Anhaften vom Lebensmitteln beim Koch-, Brat- und Backvorgang verhindern.

Üblicherweise werden Antihaft-Beschichtungen aus Polytetrafluorethylen (PTFE) enthaltenden Zusammensetzungen hergestellt.
Solche PTFE-Beschichtungen besitzen jedoch eine Reihe von Nachteilen. Zum Einen erfordern sie einen Sinterprozess bei einer Temperatur zwischen 360 und 420 °C, bei dem sich Teile der Beschichtungszusammensetzung unter Bildung toxischer Verbindungen (z.B. Fluorphosgen, Tetrafluorethen oder Trifluoressigsäure) zersetzen (Nature, Vol. 412, 19 July 2001, p. 321-324) - wobei der Sinterprozess aufgrund der hohen Temperaturen ein teurer Prozess ist. Zum Anderen weisen die PTFE-haltigen Antihaft-Beschichtungen eine unzureichende Kratzbeständigkeit auf. Darüber hinaus kann es bei Überhitzung des Kochgeschirrs zu toxischen Zersetzungsprozessen kommen. Auch die die Entsorgung von gebrauchten PTFE-haltigen Gegenständen bereitet grosse Schwierigkeiten, da PTFE sehr inert ist.

Vor diesem Hintergrund hat es in der Vergangenheit verschiedene Versuche gegeben, PTFE-haltige Antihaft-Beschichtungen durch Beschichtungen mit verbesserten Eigenschaften, aber ohne PTFE, herzustellen.

So offenbart die EP 1 835 002 A2 eine Antihaftbeschichtung aus zwei Schichten, bei der die erste sogenannte Basisschicht aus einer Matrix eines Kondensationsproduktes eines Siliciumdioxid-Sols mit einem Organoalkoxysilan besteht und darauf eine Oberschicht aus einer Matrix eines Kondensationsproduktes eines Siliciumdioxid-Sols mit einer Mischung aus einem Organoalkoxysilan und einem Fluoralkoxysilan aufgebracht ist.

Neben dieser Entwicklung der Antihaftbeschichtungen sind auch Beschichtungen auf Basis von Kondensationsprodukten verschiedener Siliciumdioxid-Sole bekannt. Beispielsweise beschreibt die DE 197 14 949 A1 eine abriebfeste glasartige Beschichtungszusammensetzung durch Hydrolyse und Kondensation eines Silanes RSi(OR')₃ mit nanoskaligen SiO₂-Teilchen und Hydroxiden der Alkali-und Erdalkalimetalle mit anschließender Umwandlung bei einer Temperatur von mehr als 400 °C in einen dichten Film. Nachteilig bei diesen Schichten ist deren unzureichender Antihaft-Effekt, der eine Verwendung solcher Schichten als Antihaft-Beschichtung bei Kochgeschirr ausschließt.

Aufgabe der vorliegenden Erfindung ist das Bereitstellen eines Artikels mit einer Beschichtungszusammensetzung, die bei deren Verwendung als Brat-, Koch- und Backgeschirr ein verbessertes Gesamteigenschaftsniveau in Bezug auf Überhitzungsbeständigkeit, Antihaft-Effekt und Oberflächenhärte aufweist. Unter einem solchen verbesserten Gesamteigenschaftsniveau wird verstanden, dass eine solche Beschichtung gegenüber herkömmlichen PTFE-haltigen Beschichtungen und Systemen auf SiO₂-Basis eine verbesserte Abrasionsbeständigkeit in Anlehnung an die Norm B.S. 7069:1988 aufweist. Darüber hinaus soll die Beschichtung - verglichen mit Systemen auf SiO₂-Basis - einen verbesserten Antihaft-Effekt aufweisen, ohne dass sich die Temperaturbeständigkeit verschlechtert. In einer weiteren Ausführungsform soll die Oberflächenhärte gegenüber den PTFE-Systemen verbessert sein. In einer weiteren Ausführungsform soll die Schicht auch bei Temperaturen über 400 °C keine toxischen Stoffe freisetzen.

Die Aufgabe wird erfindungsgemäß gelöst durch eine Artikel mit einer keramischen Antihaft-Beschichtung auf seiner Oberseite, bei dem eine erste keramische Antihaft-Beschichtung erhältlich ist durch Hydrolyse und Polykondensation einer wäßrigen Mischung, diese enthaltend
- 10 - 70 Gew.-% eines Silans der allgemeinen Formel (I)

   (I) RSiX₃

   in der die Gruppen X hydrolysierbare Gruppen oder Hydroxylgruppen sind und die Reste R für Alkyl- oder Arylgruppen mit 1 bis 6 Kohlenstoffatomen stehen,
- 8 bis 21 Gew.-% nanoskaliger SiO₂-Partikel
- 0 bis 2 Gew.-% eines Polydimethylsiloxans der allgemeinen Formel (II)

   (II) HO-[Si(CH₃)₂]ₙOH

   in der n eine Zahl zwischen 2 und 170 darstellt,
- 0,1 bis 2 Gew.-% einer Carbonsäure mit 1 bis 4 Kohlenstoffatomen,
- 7 bis 50 Gew.-% Wasser
- 10 bis 60 Gew.-% mit Wasser mischbare organische Lösemittel
wobei die zuvor genannten Gewichtsanteile zusammen 100 Gew.-% ergeben.

Bei dieser Ausführungsform besteht die keramische Antihaft-Beschichtung nur aus einer Schicht.

Die Aufgabe wird aber auch gelöst durch einen Artikel mit einer keramischen Antihaft-Beschichtung auf seiner Oberseite, bei dem eine erste keramische Antihaft-Beschichtung erhältlich ist durch Hydrolyse und Polykondensation einer wäßrigen Mischung, diese enthaltend
- 10 - 70 Gew.-% eines Silans der allgemeinen Formel (I)

   (I) RSiX₃

   in der die Gruppen X hydrolysierbare Gruppen oder Hydroxylgruppen sind und die Reste R für Alkyl- oder Arylgruppen stehen,
- 8 bis 21 Gew.-% nanoskaliger SiO₂-Partikel
- 0,1 bis 2 Gew.-% einer Carbonsäure mit 1 bis 4 Kohlenstoffatomen,
- 7 bis 50 Gew.-% Wasser
- 10 bis 60 Gew.-% mit Wasser mischbare organische Lösemittel
und bei dem eine zweite keramische Antihaft-Beschichtung auf die erste keramische Antihaft-Beschichtung aufgebracht ist und die zweite keramische Antihaft-Beschichtung erhältlich ist durch Hydrolyse und Polykondensation einer wäßrigen Mischung, diese enthaltend
- 10 - 70 Gew.-% eines Silans der allgemeinen Formel (I)

   (I) RSiX₃

   in der die Gruppen X hydrolysierbare Gruppen oder Hydroxylgruppen sind und die Reste R für Alkyl- oder Arylgruppen mit 1 bis 6 Kohlenstoffatomen stehen,
- 8 bis 21 Gew.-% nanoskaliger SiO₂-Partikel
- 0,1 bis 2 Gew.-% eines Polydimethylsiloxans der allgemeinen Formel (II)

   (II) HO-[Si(CH₃)₂]ₙ-OH

   in der n eine Zahl zwischen 2 und 170 darstellt,
- 0,1 bis 2 Gew.-% einer Carbonsäure mit 1 bis 4 Kohlenstoffatomen,
- 7 bis 50 Gew.-% Wasser
- 10 bis 60 Gew.-% mit Wasser mischbare organische Lösemittel
wobei die zuvor genannten Gewichtsanteile für jede Schicht zusammen 100 Gew.-% ergeben.

Bei dieser Ausführungsform besteht die keramische Antihaft-Beschichtung aus zwei aufeinander folgenden Schichten mit unterschiedlicher Zusammensetzung.
Dabei wird eine Basisschicht auf das Substrat, bestehend aus einer Matrix, die durch Hydrolyse- und Kondensationsreaktion eines wässrigen Silicasols mit einem Organoalkoxysilan entsteht, aufgebracht. Die auf die Basisschicht aufgebrachte Deckschicht entsteht durch Hydrolyse- und Kondensationsreaktion eines wässrigen Silicasols mit einem Organoalkoxysilan und enthält geringe Mengen eines hydroxyterminierten Polydimethylsiloxans.

Die keramische Antihaft-Beschichtung besteht folglich aus einem keramischen Polymernetzwerk das die Kondensationsprodukte von hydrolisiertem Organoalkoxysilan und kolloidalem Silicasol enthält.

Die Antihaft-Beschichtung entsteht durch chemische Reaktion des Organoalkoxysilans mit einem wässrigen Silicasol. Hierbei wird das Silan hydrolisiert und kondensiert mit den Hydroxygruppen des Silicasols und mit anderen Silanmolekülen und bildet ein keramisches Netzwerk (Sol-Gel Reaktion). Das kolloidale Silicasol ist durch eine elektrische Doppelschicht elektrostatisch stabilisiert.

Hydrolysereaktion:

R-Si(OR')₃ + 3 H₂O → R-Si(OH)₃ + 3 R'OH

Die bei der Hydrolyse gebildeten Hydroxygruppen reagieren in der Kondensationsreaktion mit sich selbst und der Oberfläche der Silica-Partikel und bilden starke Si-O-Si Bindungen. Die Reste R werden nicht hydrolisiert.

Kondensationsreaktion:

=Si-OH + HO-Si= → =Si-O-Si= + H₂O

=Si-OR' + HO-Si= → =Si-O-Si= + R'OH

Durch die Funktionalisierung der Silicapartikel-Oberfläche wird die elektrostatische Stabilisierung der SiO₂-Partikel ganz oder teilweise in eine sterische Stabilisierung umgewandelt, was die Lagerstabilität erhöhen kann.

Überraschender Weise wurde gefunden, dass in der Deckschicht auch ohne die Verwendung von Fluoralkoxysilanen (EP 1 835 002 A2) ein verbesserter Antihaft-Effekt erzielt werden kann. Dies kann auf die Verwendung geringer Mengen hydroxyterminierter Polydimethylsiloxane (PDMS) in der obersten keramischen Antihaft-Beschichtung zurück geführt werden.

Die terminalen Hydroxygruppen können über Kondensation in das Polymernetzwerk eingebaut werden. Aufgrund der hohen Hydrophobizität der PDMS wird ein ausgezeichneter Antihaft-Effekt erzielt. Hohe Molekulargewichte der PDMS führen zu besseren Anthaft-Eigenschaften. Die hohen Molekulargewichte führen jedoch zu Unlöslichkeiten im Wasser/AlkoholGemisch der Sol-Gel Reaktion. Durch Verwendung von wässrigen PDMS-Emulsionen kann diese Schwierigkeit umgangen werden.

Bevorzugt ist das Organoalkoxysilan Methyltrimethoxysilan, ganz besonders bevorzugt in Mengen zwischen 10 und 70 Gew.-%, wobei das Silicasol in Mengen zwischen 15 und 70 Gew.-% und das hydroxyterminierte Polydimethylsiloxan in Mengen zwischen 0,1 und 2 Gew.-% vorhanden sind.

Gemäß einer bevorzugten Ausführungsform ist die Carbonsäure mit 1 bis 4 Kohlenstoffatomen Essigsäure, Ameisensäure, Oxalsäure, ganz besonders bevorzugt Essigsäure. Die Carbonsäure wirkt allgemein als Katalysator in der Hydrolyse- und Kondensationsreaktion und verhindert ein zu langsames Vernetzen.
Es ist aber auch möglich, anstelle der Carbonsäure eine oder mehrere Mineralsäuren (z.B. Salzsäure, Salpetersäure, Phosphorsäure, Schwefelsäure etc.) zu verwenden.

Gemäß einer bevorzugten Ausführungsform ist das mit Wasser mischbare organische Lösemittel ein niederer Alkohol, insbesondere ein Alkohol mit 1 bis 6 Kohlenstoffatomen, besonders bevorzugt *iso*-Propanol.
Das Lösemittel hat die Aufgabe die Beschichtungszusammensetzung auf den gewünschten Feststoffgehalt einzustellen.

Gemäß einer ebenfalls bevorzugten Ausführungsform weist die direkt auf der Oberfläche des Artikels befindliche erste keramische Antihaft-Beschichtung zusätzlich Hartstoffpartikel auf, insbesondere Carbide, besonders bevorzugt Siliciumcarbid. Dies hat den Vorteil, dass die Abriebbeständigkeit nochmals verbessert wird.

Die Basisschicht, d.h. die direkt auf der Oberfläche des Artikels befindliche erste keramische Antihaft-Beschichtung, enthält temperaturbeständige anorganische Pigmente, insbesondere Spinellpigmente.
Diese Pigmente zeichnen sich durch hohe Temperaturbeständigkeiten und Beständigkeit gegen Chemikalien aus und besitzen ausgezeichnete Migrationsbeständigkeiten.

Die Deckschicht ist entweder transparent oder sie kann zusätzlich Effektpigmente enthalten.

Gemäß einer bevorzugten Ausführungsform handelt es sich bei dem Silan der allgemeinen Formel (I) um ein solches, bei dem R eine Methyl-, Ethyl- oder Phenylgruppe darstellt und/- oder bei dem X eine Methoxy- oder Ethoxygruppe darstellt.

Gemäß einer ganz besonders bevorzugten Ausführungsform ist die keramische Antihaft-Beschichtung frei von fluorierten Verbindungen, insbesondere frei von Fluoralkoysilanen sowie ganz oder teilweise fluorierten Polymeren oder Copolymeren. Das bedeutet, dass keine der erfindungsgemäß beanspruchten keramischen Antihaft-Beschichtungen solche Verbindungen enthalten. Auf diese Weise wird gewährleistet, dass selbst bei Temperaturen von mehr als 400 °C keine toxischen Zersetzungsprodukte freigesetzt werden, wie sie beispielsweise bei der Verwendung von PTFE entstehen.

Bei dem Artikel handelt es sich um ein beschichtetes Substrat aus rostfreiem Stahl, Stahl, Aluminium, einer Aluminiumlegierung oder einer mit einer oxidischen Hartschicht aus Al₂O₃/TiO₂ überzogenen Aluminiumlegierung.

Die Beschichtungszusammensetzung besteht aus je drei verschieden Komponenten (A, B und C), die vor dem Beschichtungsvorgang unter Rühren vereinigt werden.
Zu Komponente A wird unter Rühren die Komponente B zugegeben und 2 Std. gerührt. Nach 2 Stunden wird unter Rühren die Komponente C zugegeben und eine weitere halbe Stunde gerührt.
Nach 2,5 Std. wird die Beschichtungszusammensetzung durch ein 60 Mikrometer Sieb abgesiebt und steht zur Beschichtung des Substrates zur Verfügung.

Die folgende Tabelle gibt die Zusammensetzung der einzelnen Komponenten für eine keramische Beschichtung bestehend aus zwei Schichten an:

**Tabelle I:**

| **Komponente** | **A** | **B** | **C** |
|---|---|---|---|
| **Basisschicht** | Silicasol | Organoalkoxysilan + saurer Katalysator | anorganische Pigmente, Füllstoffe, Additive und Lösungsmittel |
| **Deckschicht** | Silicasol, Alkohol und PDMS-Emulsion | Organoalkoxysilan + saurer Katalysator | Lösungsmittel und Additive (evtl. Effektpigmente) |

Für eine keramische Beschichtung bestehend aus einer Schicht gilt abweichend folgende Zusammensetzung der einzelnen Komponenten:

**Tabelle II:**

| **Komponente** | **A** | **B** | **C** |
|---|---|---|---|
| **Einschicht-System** | Silicasol | Organoalkoxysilan + saurer Katalysator | anorganische Pigmente, PDMS-Emulsion, Füllstoffe, Additive und Lösungsmittel |

Die Beschichtung des Substrates erfordert üblicherweise folgende Vorbehandlungsschritte:
1. Entfernen von Staub, Fett und Öl von der Substratoberfläche
2. Trocknung der Substratoberfläche
3. Aufrauhung der Substratoberfläche durch Sandstrahlen
4. Säubern der Substratoberfläche und Vorwärmung der Substratoberfläche

Durch Einbrennen der Beschichtung bildet sich eine harte glasartige Beschichtungsoberfläche mit sehr guten Antihaft-Eigenschaften.

### Beispiele:

### Beispiel 1 (Keramische Antihaft-Beschichtung aus nur einer Schicht):

33,24 g Levasil 300/30 (H.C. Starck) werden in einem Glasgefäss vorgelegt (Komponente A) und mit einer Mischung aus 1,99 g 98% Essigsäure und 22,16 g Dynasylan MTMS (Methyltrimethoxysilan; Evonik) (Komponente B) versetzt und 2 Stunden bei Raumtemperatur gerührt. Die anfangs trübe Lösung beginnt nach ca. 10 Minuten klarer zu werden. Zu dieser Reaktionsmischung wird eine Pigmentpaste gegeben (Komponente C), die aus 16,62 g Isopropylalkohol, 16,62 g Pigmentschwarz PK 3095 (Ferro), 8,31 g Siliciumcarbid P 1200, 0,58 g einer 1:1 Mischung von Dow Corning Additiv 57 in Butyldiglycolacetat und 0,49 g BRB Sempure 680 (63%ige hydroxyterminierte PDMS-Emulsion in Wasser) besteht. Nach Zugabe der Pigmentpaste wird erneut eine halbe Stunde gerührt und anschliessend durch ein Sieb mit Maschenweite 60 µm abgesiebt.

### Beispiel 2 (Keramische Antihaft-Beschichtung mit zwei Schichten):

### Herstellung der Basisschicht:

33,9 g Levasil 300/30 (H.C. Starck) werden in einem Glasgefäss vorgelegt (Komponente A) und mit einer Mischung aus 0,37 g 98% Essigsäure und 22,6 g Dynasylan MTMS (Evonik) (Komponente B) versetzt und 2 Stunden bei Raumtemperatur gerührt. Die anfangs trübe Lösung beginnt nach ca. 10 Minuten klarer zu werden.
Zu dieser Reaktionsmischung wird eine Pigmentpaste gegeben (Komponente C), die aus 16,9 g Isopropylalkohol, 16,9 g Pigmentschwarz PK 3095 (Ferro), 8,5 g Siliciumcarbid P 1200 und 0,55 g einer 1:1 Mischung von Dow Corning Additiv 57 in Butyldiglycolacetat besteht. Nach Zugabe der Pigmentpaste wird erneut eine halbe Stunde gerührt und anschliessend durch ein Sieb mit Maschenweite 60 µm abgesiebt.

### Herstellung der Deckschicht:

28,8 g Levasil 300/30 (H.C. Starck) werden in einem Glasgefäss vorgelegt und zunächst mit einer Mischung aus 0,27 g BRB Sempure 680 und 4,12 g *iso*-Propanol kurz gerührt (Komponente A). Diese trübe Lösung wird unter Rühren mit einer Mischung aus 0,32 g 98% Essigsäure und 19,21 g Dynasylan MTMS (Evonik) (Komponente B) versetzt und 2 Stunden bei Raumtemperatur gerührt.
Zu dieser Reaktionsmischung werden noch 41,04 g *iso*-Propanol, 0,92 g Byk 306 und 4,6 g 1-Methoxy-2-propanol und gegeben und anschliessend durch ein Sieb mit Maschenweite 60 µm abgesiebt.

### Vergleichsbeispiel 1 (gemäß EP 1 835 002 A2):

### Herstellung der Basisschicht:

39,6 g Levasil 300/30 (H.C. Starck) werden in einem Glasgefäss vorgelegt (Komponente A) und mit einer Mischung aus 0,4 g 98% Essigsäure und 26,4 g Dynasylan MTMS (Evonik) (Komponente B) versetzt und 2 Stunden bei Raumtemperatur gerührt. Die anfangs trübe Lösung beginnt nach ca. 10 Minuten klarer zu werden.
Zu dieser Reaktionsmischung wird eine Pigmentpaste gegeben (Komponente C), die aus 13,2 g Isopropylalkohol und 19,8 g Pigmentschwarz PK 3095 (Ferro) und 0,6 g einer 1:1 Mischung von Dow Corning Additiv 57 in Butyldiglycolacetat-besteht. Nach Zugabe der Pigmentpaste wird erneut eine halbe Stunde gerührt und anschliessend durch ein Sieb mit Maschenweite 60 µm abgesiebt.

### Herstellung der Deckschicht:

28,6 g Levasil 300/30 (H.C. Starck) werden in einem Glasgefäss vorgelegt und zunächst mit einer Mischung aus 0,3 g DMS-S12 (hydroxyterminiertes Polydimethylsiloxan, ABCR, M = 400-700 g/mol) und 4,1 g *iso*-Propanol kurz gerührt (Komponente A). Diese Lösung wird unter Rühren mit einer Mischung aus 0,3 g 98% Essigsäure, 19,1 g Dynasylan MTMS (Evonik) und 1,5 g 1*H*,1*H*,2*H*,2*H*-Perfluorooctyltriethoxysilan 97% (Alfa Aesar; ein handelsübliches Fluoralkoxysilan) (Komponente B) versetzt und 2 Stunden bei Raumtemperatur gerührt.
Zu dieser Reaktionsmischung werden noch 40,6 g *iso*-Propanol, 0,9 g Byk 306 und 4,6 g 1-Methoxy-2-propanol und gegeben und anschliessend durch ein Sieb mit Maschenweite 60 µm abgesiebt.

### Vergleichsbeispiel 2:

Eine 2-Schicht Antihaft-Beschichtung bestehend aus einem Primer und einer Deckschicht wird auf eine gedrückte Aluminium-Pfanne aufgebracht.
Der Primer dient als Unterschicht und wird bei 80 °C für 5 Minuten getrocknet. Auf den getrockneten und abgekühlten Primer wird die Deckschicht lackiert und anschliessend wird die Deckschicht 10 Minuten bei 420 °C versintert.

In den folgenden Tabellen sind die Zusammensetzungen der beiden Schichten angegeben.

| **Primerzusammensetzung** | Gew.% |
|---|---|
| PAI | 5,02 |
| Wasser | 72,52 |
| Furfurylalkohol | 3,87 |
| Diethanolamin | 0,70 |
| Triethylamin | 1,42 |
| Triethanolamin | 0,23 |
| N-Methylpyrrolidon | 3,29 |
| Furfurylalkohol | 1,75 |
| Surfynol 440 | 0,26 |
| PTFE (Feststoffanteil in wässriger Dispersion) | 4,53 |
| Alkylphenylethoxy Netzmittel | 1,86 |
| FEP (Feststoffanteil in wässriger Dispersion) | 3,11 1 |
| Ludox AM (kolloidales Silicasol) | 1,05 |
| Rußpigment | 0,39 |
| Total | 100 |

| | |
|---|---|
| **Deckschichtzusammensetzung** | |
| PTFE (Feststoffanteil in wässriger Dispersion) | 41,05 |
| Nonylphenolpolyethoxy Netzmittel | 4,00 |
| Wasser | 35,66 |
| PFA (Feststoffanteil in wässriger Dispersion) | 2,24 |
| Octylphenolpolyethoxy Netzmittel | 1,36 |
| Iriodin 153 (Merck) | 0,43 |
| Ceroctoat | 0,59 |
| Butylcarbitol | 1,55 |
| Triethanolamin | 5,96 |
| Solvesso 100 | 1,94 |
| Acrylharz | 5,22 |
| Total | 100 |

### Untersuchung der erhaltenen keramischen Antihaft-Beschichtungen am Beispiel von Bratpfannen:

Die in Beispiel 2 beschriebenen Lösungen wurden auf sandgestrahlte gedrückte Aluminiumpfannen mittels einer Fliessbechersprühpistole aufgebracht, derart dass die Deckschicht direkt auf die noch feuchte Basisschicht lackiert wurde.
Die erhaltenen Beschichtungen wurden in einem Ofen bei einer Temperatur von 140 °C und einer Dauer von 5 Min. getrocknet, dann anschließend in einem weiteren Ofen bei einer Temperatur von 200 °C und einer Dauer von 20 Min. eingebrannt.
In einem weiteren Versuch wurden Pfannen aus Aluminium-Druckguß, die mit einer Hartschicht aus Al₂O₃/TiO₂ überzogen wurden, verwendet.
Insgesamt wurden je 5 Pfannen pro Test beschichtet und untersucht. Die in den Tabellen III und IV dargestellten Werte sind die resultierenden Mittelwerte.

Die so hergestellten Pfannen werden den nachstehend beschriebenen Untersuchungen unterzogen:

### Beurteilung der Abrasionsbeständigkeit:

Die Untersuchung der Abrasionsbeständigkeit wurde in Anlehnung an die Norm B.S. 7069:1988 durchgeführt. Hierbei wurde ein Scheuerpad (3M Scotch-Brite CF-HP, A-VFN) auf einem Stempel befestigt und auf den Prüfling aufgelegt. Der Prüfling wurde mit einer Spülmittellösung (5 g pro Liter Wasser) so angefeuchtet, dass die Prüffläche gerade bedeckt war. Der Stempel wurde mit einem Gewicht von 1,5 kg (1,5 N +/-0,2 N) belastet und in einer Hin- und Herbewegung über den Prüfling bewegt. Nach 100 Hüben wurde die Scheuer-Pad-Seite gewechselt und nach weiteren 100 Hüben wurde das Scheuer-Pad komplett gewechselt.
Sobald 30 % des Untergrundes sichtbar waren, wurde der Test abgebrochen und die Hubzahl notiert.

### Beurteilung der Oberflächenhärte

Die Oberflächenhärte wurde mittels des Bleistifthärte-Tests in Anlehnung an die DIN EN 13523-4 bestimmt.

### Beurteilung der Antihafteigenschaften

Zur Beurteilung der Antihaft-Eigenschaften wurde folgender Test durchgeführt
1. Pfanne auf 180 - 200 °C erhitzen
2. 2 EL Öl hinzugeben, von der Heizquelle nehmen, 5 Min abkühlen lassen und mit Papier auswischen
3. Ein Spiegelei von beiden Seiten braten, mit Papier auswischen
4. Kondensmilch (10%) braun-schwarz einbrennen, mit Papier auswischen
5. 45 g Zucker bis braun-schwarz aber noch flüssig aufheizen, mit 200 ml Wasser ablöschen, mit Papier reinigen
6. 40 g Zucker und 90 g Orangensaft bis braun-schwarz einkochen, mit 200 ml Wasser ablöschen, mit Papier reinigen
7. 200 ml Wasser mit Spülmittel 3 Min aufkochen, mit Papier reinigen
8. 1 Omelett aus 500 ml Milch, 300 g Mehl, 4 Eiern und einer Prise Salz von beiden Seiten backen
9. Milch einkochen bis braun-schwarz, mit Papier reinigen
Dieser Test-Zyklus wurde solange wiederholt, bis eine erschwerte Reinigung zu beobachten war.

### Beurteilung der Temperaturbeständigkeit

Aus Nature, Vol. 412, 19 July 2001, p. 321-324 ist bekannt, dass sich PTFE bei 360 °C unter Abspaltung von giftigen fluororganischen Verbindungen zersetzt. Insofern sind PTFE-haltige Beschichtungen nur bis zu einer Dauergebrauchstemperatur von 250 °C lebensmittelrechtlich zugelassen.

Um die Temperaturbeständigkeit der untersuchten Beschichtungen und den Einfluss der Temperaturbelastung auf den Antihaft-Effekt zu untersuchen wurden die Prüflinge 1h bei 300, 350, 400 und 450 °C in einem Umluftofen erhitzt. Nach jeweils einer Stunde wurde der Antihaft-Effekt mit einem Ei- und Milchtest überprüft.

Der in Tabelle IV angegebene Wert gibt die Temperatur an, bei der der Prüfling noch zu reinigen war bzw. das Ei mit einem Spatel noch abgehoben werden konnte.

In den folgenden Tabellen sind die Testergebisse zusammengefasst:

**Tabelle III:**

| | **Abrasionsbeständigkeit nach B.S. 7069:1988** | **Bleistifthärte nach DIN EN 13523-4** | **Antihaft-Eigenschaften** |
|---|---|---|---|
| **Beispiel 2** | 40 000 | > 9 H | 15 Zyklen |
| **Vergleichsbeispiel 1 (gem.** EP 1 835 002 A2**)** | 11 000 | > 9 H | 11 - 13 Zyklen |
| **Vergleichsbeispiel 2 (PTFE-Beschichtung)** | 20 000 | 3 - 4 H | > 25 Zyklen |

Tabelle III zeigt deutlich, dass die erfindungsgemässe Beschichtung (Beispiel 2) eine höhere Abrasionsbeständigkeit und eine höhere Oberflächenhärte im Vergleich zu herkömmlichen PTFE-Beschichtungen aufweist.
Darüber hinaus weist die erfindungsgemässe Beschichtung (Beispiel 2) einen verbesserten Antihaft-Effekt gegenüber dem Vergleichsbeispiel (EP 1 835 002 A2) auf.

**Tabelle IV**

| | **Temperaturbeständigkeit und Antihaft-Effekt (Ei- bzw. Milchtest)** |
|---|---|
| **Beispiel 2** | 400 - 450 °C |
| **Vergleichsbeispiel 1 (gem.** EP 1 835 002 A2**)** | 400 - 450 °C |

Tabelle IV zeigt deutlich, dass die Temperaturbeständigkeit der erfindungsgemässen Beschichtung gegenüber dem Vergleichsbeispiel 1 (gemäss EP 1 835 002 A2) nicht verschlechtert ist.

## Patentansprüche

1. Artikel mit einer keramischen Antihaft-Beschichtung auf seiner Oberseite, bei dem eine erste keramische Antihaft-Beschichtung erhältlich ist durch Hydrolyse und Polykondensation einer wässrigen Mischung, diese enthaltend
- 10 - 70 Gew.-% eines Silans der allgemeinen Formel (I)
(I) RSiX₃
in der die Gruppen X hydrolysierbare Gruppen oder Hydroxylgruppen sind und die Reste R für Alkyl- oder Arylgruppen mit 1 bis 6 Kohlenstoffatomen stehen,
- 8 bis 21 Gew.-% nanoskaliger SiO₂-Partikel
- 0 bis 2 Gew.-% eines Polydimethylsiloxans der allgemeinen Formel (II)
(II) HO-[Si(CH₃)₂]ₙ-OH
in der n eine Zahl zwischen 2 und 170 darstellt,
- 0,1 bis 2 Gew.-% einer Carbonsäure mit 1 bis 4 Kohlenstoffatomen,
- 7 bis 50 Gew.-% Wasser
- 10 bis 60 Gew.-% mit Wasser mischbare organische Lösemittel, wobei die zuvor genannten Gewichtsanteile zusammen 100 Gew.-% ergeben
wobei die keramische Antihaft-Beschichtung frei von fluorierten Verbindungen ist, insbesondere frei von Fluoralkoysilanen sowie ganz oder teilweise fluorierten Polymeren oder Copolymeren.

2. Artikel mit einer keramischen Antihaft-Beschichtung auf seiner Oberseite, bei dem eine erste keramische Antihaft-Beschichtung erhältlich ist durch Hydrolyse und Polykondensation einer wässrigen Mischung, diese enthaltend
- 10 - 70 Gew.-% eines Silans der allgemeinen Formel (I)
(I) RSiX₃
in der die Gruppen X hydrolysierbare Gruppen oder Hydroxylgruppen sind und die Reste R für Alkyl- oder Arylgruppen stehen,
- 8 bis 21 Gew.-% nanoskaliger SiO₂-Partikel
- 0,1 bis 2 Gew.-% einer Carbonsäure mit 1 bis 4 Kohlenstoffatomen,
- 7 bis 50 Gew.-% Wasser
- 10 bis 60 Gew.-% mit Wasser mischbare organische Lösemittel und bei dem eine zweite keramische Antihaft-Beschichtung auf die erste keramische Antihaft-Beschichtung aufgebracht ist und die zweite keramische Antihaft-Beschichtung erhältlich ist durch Hydrolyse und Polykondensation einer wässrigen Mischung, diese enthaltend
- 10 - 70 Gew.-% eines Silans der allgemeinen Formel (I)
(I) RSiX₃
in der die Gruppen X hydrolysierbare Gruppen oder Hydroxylgruppen sind und die Reste R für Alkyl- oder Arylgruppen mit 1 bis 6 Kohlenstoffatomen stehen,
- 8 bis 21 Gew.-% nanoskaliger SiO₂-Partikel
- 0,1 bis 2 Gew.-% eines Polydimethylsiloxans der allgemeinen Formel (II)
(II) HO-[Si(CH₃)₂]ₙ-OH
in der n eine Zahl zwischen 2 und 170 darstellt,
- 0,1 bis 2 Gew.-% einer Carbonsäure mit 1 bis 4 Kohlenstoffatomen,
- 7 bis 50 Gew.-% Wasser
- 10 bis 60 Gew.-% mit Wasser mischbare organische Lösemittel, wobei die zuvor genannten Gewichtsanteile für jede Schicht zusammen 100 Gew.-% ergeben
wobei die keramische Antihaft-Beschichtungen frei von fluorierten Verbindungen sind, insbesondere frei von Fluoralkoysilanen sowie ganz oder teilweise fluorierten Polymeren oder Copolymeren.

3. Artikel nach einem der vorhergehenden Ansprüche, **dadurch gekennzeichnet, dass** die Carbonsäure Essigsäure ist.

4. Artikel nach einem der vorhergehenden Ansprüche, **dadurch gekennzeichnet, dass** das mit Wasser mischbare organische Lösemittel ein niederer Alkohol, insbesondere ein Alkohol mit 1 bis 6 Kohlenstoffatomen, besonders bevorzugt iso-Propanol, ist.

5. Artikel nach einem der vorhergehenden Ansprüche, **dadurch gekennzeichnet, dass** die direkt auf der Oberfläche des Artikels befindliche erste keramische Antihaft-Beschichtung zusätzlich Hartstoffpartikel aufweist, insbesondere Carbide, besonders bevorzugt Siliciumcarbid.

6. Artikel nach einem der vorhergehenden Ansprüche, **dadurch gekennzeichnet, dass** die die direkt auf der Oberfläche des Artikels befindliche erste keramische Antihaft-Beschichtung zusätzlich temperaturbeständige anorganische Pigmente aufweist, insbesondere Spinellpigmente.

7. Artikel nach einem der vorhergehenden Ansprüche, **dadurch gekennzeichnet, dass** bei dem Silan der allgemeinen Formel (I) R eine Methyl-, Ethyl- oder Phenylgruppe darstellt.

8. Artikel nach einem der vorhergehenden Ansprüche, **dadurch gekennzeichnet, dass** bei dem Silan der allgemeinen Formel (I) X eine Methoxy- oder Ethoxygruppe darstellt.

9. Artikel nach einem der vorhergehenden Ansprüche 7 oder 8, **dadurch gekennzeichnet, dass** das Silan der allgemeinen Formel (I) Methyltrimethoxysilan ist.

10. Artikel nach einem der vorhergehenden Ansprüche, **dadurch gekennzeichnet, dass** der Artikel ein beschichtetes Substrat aus rostfreiem Stahl, Stahl, Aluminium, einer Aluminiumlegierung oder einer mit einer oxidischen Hartschicht aus Al₂O₃/TiO₂ überzogenen Aluminiumlegierung ist.

## Claims

1. An article with a ceramic non-stick coating on its upper face, wherein a first ceramic non-stick coating is obtainable by means of hydrolysis and polycondensation of an aqueous blend, the latter comprising
- 10 - 70 wt.-% of a silane of general formula (I)
(I) RSiX₃
wherein the groups X are hydrolyzable groups or hydroxyl groups and the residues R stand for alkyl or aryl groups comprising 1 to 6 carbon atoms,
- 8 to 21 wt.-% nanoscale SiO₂-particles
- 0 to 2 wt.-% of a polydimethylsiloxane of general formula (II)
(II) HO-[Si(CH₃)₂]ₙ-OH
wherein n represents a number between 2 and 170,
- 0,1 to 2 wt.-% of a carboxylic acid comprising 1 to 4 carbon atoms,
- 7 to 50 wt.-% water
- 10 to 60 wt.-% organic solvents miscible with water,
wherein the weight fractions mentioned above add up to 100 wt.-%,
wherein the ceramic non-stick coating is free of fluorinated compounds, in particular free of fluoroalkoxysilanes and fully or partially fluorinated polymers or copolymers.

2. An article with a ceramic non-stick coating on its upper face, wherein a first ceramic non-stick coating is obtainable by means of hydrolysis and polycondensation of an aqueous blend, the latter comprising
- 10 - 70 wt.-% of a silane of general formula (I)
(I) RSiX₃
wherein the groups X are hydrolyzable groups or hydroxyl groups and the residues R stand for alkyl or aryl groups,
- 8 to 21 wt.-% nanoscale SiO₂-particles
- 0,1 to 2 wt.-% of a carboxylic acid comprising 1 to 4 carbon atoms,
- 7 to 50 wt.-% water
- 10 to 60 wt.-% organic solvents miscible with water,
and wherein a second ceramic non-stick coating is applied onto the first ceramic non-stick coating, and wherein the second ceramic non-stick coating is obtainable by means of hydrolysis and polycondensation of an aqueous blend, the latter comprising
- 10 - 70 wt.-% of a silane of general formula(l)
(I) RSiX₃
wherein the groups X are hydrolyzable groups or hydroxyl groups and the residues R stand for alkyl or aryl groups comprising 1 to 6 carbon atoms,
- 8 to 21 wt.-% nanoscale SiO₂-particles
- 0,1 to 2 wt.-% of a polydimethylsiloxane of general formula (II)
(II) HO-[Si(CH₃)₂]ₙ-OH
wherein n represents a number between 2 and 170,
- 0,1 to 2 wt.-% of a carboxylic acid comprising 1 to 4 carbon atoms,
- 7 to 50 wt.-% water
- 10 to 60 wt.-% organic solvents miscible with water,
wherein the weight fractions mentioned above add up to 100 wt.-%,
wherein the ceramic non-stick coatings are free of fluorinated compounds, in particular free of fluoroalkoxysilanes and fully or partially fluorinated polymers or copolymers.

3. The article according to one of the preceding claims, **characterized in that** the carboxylic acid is acetic acid.

4. The article according to one of the preceding claims, **characterized in that** the organic solvent miscible with water is a low-chain alcohol, particularly an alcohol comprising 1 to 6 carbon atoms, most preferably iso-propanol.

5. The article according to one of the preceding claims, **characterized in that** the first ceramic non-stick coating applied directly onto the article's surface further comprises hard material particles, particularly carbides, most preferably silicon carbide.

6. The article according to one of the preceding claims, **characterized in that** the first ceramic non-stick coating applied directly onto the article's surface further comprises temperature-resistant inorganic pigments, particularly spinel pigments.

7. The article according to one of the preceding claims, **characterized in that** in the silane of general formula (I) R represents a methyl, ethyl or phenyl group.

8. The article according to one of the preceding claims, **characterized in that** in the silane of general formula (I) X represents a methoxy or ethoxy group.

9. The article according to one of preceding claims 7 or 8, **characterized in that** the silane of general formula (I) is methyltrimethoxysilane.

10. The article according to one of the preceding claims, **characterized in that** the article is a coated substrate made of stainless steel, steel, aluminum, an aluminum alloy or an aluminum alloy covered with an oxidic hard layer made of Al₂O₃/TiO₂.

## Revendications

1. Article comportant un revêtement antiadhésif céramique sur sa face supérieure dans lequel un premier revêtement antiadhésif céramique peut être obtenu par hydrolyse et polycondensation d'un mélange aqueux, ce mélange renfermant :
- 10-70 % en poids d'un silane de formule générale (I)
(I) RSiX₃
dans laquelle les groupes X sont des groupes hydrolysables ou des groupes hydroxyles et les restes R représentent des groupes alkyles ou aryles ayant de 1 à 6 atomes de carbone
- 8 à 21 % en poids de particules de SiO₂ nanométriques
- 0 à 2 % en poids d'un poly diméthyl siloxane de formule générale (II)
(II) HO-[Si(CH₃)₂]ₙ-OH
dans laquelle n représente un nombre compris entre 2 et 170,
- 0,1 à 2 % en poids d'un acide carboxylique ayant de 1 à 4 atomes de carbone
- 7 à 50 % en poids d'eau
- 10 à 60 % en poids d'un solvant organique miscible à l'eau, les fractions pondérales susmentionnées s'additionnant à 100 %,
le revêtement antiadhésif céramique étant exempt de composés fluorés, en particulier exempt de fluoroalkoysilanes ainsi que de polymères ou copolymères totalement ou partiellement fluorés.

2. Article comportant un revêtement antiadhésif céramique sur sa face supérieure dans lequel un premier revêtement antiadhésif céramique peut être obtenu par hydrolyse et polycondensation d'un mélange aqueux, ce mélange renfermant :
- 10-70 % en poids d'un silane de formule générale (I)
(I) RSiX₃
dans laquelle les groupes X sont des groupes hydrolysables ou des groupes hydroxyles et les restes R représentent des groupes alkyles ou aryles
- 8 à 21 % en poids de particules de SiO₂ nanométriques
- 0,1 à 2 % en poids d'un acide carboxylique ayant de 1 à 4 atomes de carbone
- 7 à 50 % en poids d'eau
- 10 à 60 % en poids d'un solvant organique miscible à l'eau, et dans lequel un second revêtement antiadhésif céramique est appliqué sur le premier revêtement antiadhésif céramique, ,et ce second revêtement antiadhésif céramique peut être obtenu par hydrolyse et polycondensation d'un mélange aqueux, ce mélange renfermant :
- 10-70 % en poids d'un silane de formule générale (I)
(I) RSiX₃
dans laquelle les groupes X sont des groupes hydrolysables ou des groupes hydroxyles et les restes R représentent des groupes alkyles ou aryles ayant de 1 à 6 atomes de carbone,
- 8 à 21 % en poids de particules de SiO₂ nanométriques
- 0,1 à 2 % en poids d'un poly diméthyl siloxane de formule générale (II)
(II) HO-[Si(CH₃)₂]ₙ-OH
dans laquelle n représente un nombre compris entre 2 et 170,
- 0,1 à 2 % en poids d'un acide carboxylique ayant de 1 à 4 atomes de carbone
- 7 à 50 % en poids d'eau
- 10 à 60 % en poids d'un solvant organique miscible à l'eau, les fractions pondérales susmentionnées s'additionnant à 100 % en poids sur chacune des couches, les revêtements antiadhésifs céramiques étant exempts de composés fluorés, en particulier exempts de fluoroalkoysilanes ainsi que de polymères ou copolymères totalement ou partiellement fluorés.

3. Article selon l'une des revendications précédentes,
**caractérisé en ce que**
l'acide carboxylique est l'acide acétique.

4. Article selon l'une quelconque des revendications précédentes,
**caractérisé en ce que**
le solvant organique miscible à l'eau est un alcool inférieur, en particulier un alcool ayant de 1 à 6 atomes de carbone et de façon particulièrement préférentielle l'isopropanol.

5. Article selon l'une des revendications précédentes,
**caractérisé en ce que**
le premier revêtement antiadhésif céramique se trouvant directement sur la surface de l'article renferme en outre des particule d'un matériau dur en particulier de carbure et de façon particulièrement préférentielle de carbure de silicium.

6. Article selon l'une des revendications précédentes,
**caractérisé en ce que**
le premier revêtement antiadhésif céramique se trouvant directement sur la surface de l'article renferme en outre des pigments anorganiques résistants à la température, en particulier des pigments de spinelles.

7. Article selon l'une des revendications précédentes,
**caractérisé en ce que**
dans le silane de formule générale (I) R représente un groupe méthyle, éthyle ou phényle.

8. Article selon l'une des revendications précédentes,
**caractérisé en ce que**
dans le silane de formule générale (I) X représente un groupe méthoxy ou éthoxy.

9. Article selon l'une des revendications 7 et 8,
**caractérisé en ce que**
le silane de formule générale (I) est du méthyltriméthoxysilane.

10. Article selon l'une des revendications précédentes,
**caractérisé en ce que**
l'article est un substrat revêtu en acier inoxydable, acier aluminium, un alliage d"alumium ou un alliage d'aluminium revêtu d'une couche dure oxydée en Al₂O₃/TiO₂.
